# EUROPEAN PATENT APPLICATION

(11) **EP 2 298 524 A1**
(43) Date of publication of application: **23.03.2011**
(21) Application number: 10275097.3
(22) Date of filing: 16.09.2010
(51) Int. Cl.: B29C 33/00, B29C 33/38, H04R 25/00

(54) **Custom injection mould and moulding process using rapid prototyping processes**

(30) Priority: 21.09.2009 US 244212 P; 22.10.2009 US 604110
(71) Applicant: Basseas Stavros, Park Ridge, IL 60068 (US)
(72) Inventor: Basseas Stavros, Park Ridge, IL 60068 (US)
(74) Representative: Vigars, Christopher Ian

(57) **Abstract**

A method of forming custom shaped injection moulded parts from elastomeric materials includes using a rapid prototyping system to create a rigid, hollow, mould. The mould has a relatively thin, breakable, side wall. Elastomeric material can be injected into the mould and cured. The mould can then be broken to extract a cured elastomeric part.

## Description

### FIELD OF THE INVENTION

The invention pertains to methods of manufacturing custom ear moulds. More particularly, the invention pertains to such methods and associated products which incorporate rapid prototyping systems in fabricating the custom ear moulds.

### BACKGROUND OF THE INVENTION

Custom shaped ear pieces are regularly used throughout industries that include ear plug production, hearing protection, hearing aid manufacture, assisted listening device manufacture, and headphone products. Quite often hard plastic materials (>80 Shore A) are used to make the custom fit device; however, ear pieces from softer elastomeric materials (<80 Shore A) are also available and desirable. The processes for making elastomeric custom shaped ear pieces have existed in two basic forms:
1. Silicone Moulds cast from a Hydrocolloid or Silicone Negative Moulds,
2. Silicone Moulds Cast in Multi Section Moulds Produced on a Rapid Prototyping System.

The Silicone Mould method starts with a positive representation of the final object that has been created by one of two methods 1) a positive representation of the final shape which has been manually sculpted from a silicone ear impression, and 2) a positive representation of the final shape that was created from an scanned ear impression, has been electronically sculpted and then produced on a rapid prototyping machine.

The positive representation is placed in a tray with a barrier around it taller than the positive representation and a large opening on top for pouring material over the positive. The positive is then covered with a liquid material that fills in the volume around the positive shape, this liquid, when solidified, constitutes a negative mould. The liquid material for the negative or "duplicating" mould is typically a hydrocolloid, silicone or urethane material. These materials all have elastomeric properties in case the original positive shape has undercuts.

After the duplicating mould material has solidified the original positive is removed from the mould leaving a negative mould. In preparation for moulding, often a mould release agent is added to the mould surface to prevent the elastomeric material from sticking to the mould-particularly if the mould and the filler material are similar in chemistry. Before the elastomeric material is added, mould "cores" can be inserted into the negative mould to create features in the new moulded positive. These cores can create sound tubes or air vents in the moulds, or possible cavities in the mould for other functions. But the complexity of such cores in regard to shape and placement is limited in this technology.

This mould is then filled with an elastomeric material to reform the positive shape in the elastomeric material. After the elastomeric material has solidified the positive piece is removed. At this point other features can be added to the mould by drilling, milling or grinding.

Disadvantages to the "Silicone Moulds cast from a Hydrocolloid or Silicone Negative Moulds" process when compared to the present Invention are:
1. the manual labour requirement in making the mould is higher,
2. there are more limitations of the core features that may be added to the mould in that it is difficult to place the cores in the proper orientation and the cores themselves cannot be of a complex shape, and
3. post processing of elastomeric materials with drills, routers and grinding bits is difficult and imprecise.

A method of using multi section moulds for moulding elastomeric ear moulds again uses computer aided design software to create the positive. However, in this process the positive is then electronically subtracted from a larger pre-designed cavity, typically in the shape of a block or cube. After subtracting the positive form the mould block is electronically divided into sections, alignment features are added along with injection ports and air vents.

The various sections of the mould are then produced on a rapid prototyping system. After the sections are cleaned and cured they are polished to make a better mating surface between the mould block sections. Then the sections are assembled using the alignment features to form a closed cavity mould. Elastomeric material is injected into the mould. After the material solidifies the mould block is disassembled to release the finished article.

Disadvantages to this process are:
1. the mould block requires more rapid prototyping material than the proposed invention,
2. the mould surfaces are not flat due to the nature of the rapid prototyping technology and require either polishing or if left unpolished they will result in mould flash,
3. the alignment features will not be as precise as a one piece mould and therefore can cause distortion or flash in the finished article,
4. because the sections have to come apart the mould is limited in the type and complexity of the undercuts and features designed into the mould.

### SUMMARY OF THE PRESENT INVENTION

According to one aspect of the present invention, there is provided a method comprising establishing a representation of a shape of an ear cavity, forming a second representation of the shape of the ear cavity wherein the second representation is larger than the representation by a predetermined amount, deleting interior material from the second representation in accordance with the shape of the representation thereby producing a substantially hollow region in the second representation, and filling the hollow region, at least in part, with an elastomeric material, and curing the elastomeric material to form an elastomeric object.

According to another aspect of the present invention, there is provided an element comprising a hollow, rigid shell with an interior surface which replicates a selected interior portion of an individual's ear, and an elastomeric member, contained substantially within the shell, wherein an external surface of the member abuts and is in contact with at least portions of the interior surface of the shell, and wherein portions of the shell extend into the elastomeric member and are surrounded thereby, at least in part.

According to another aspect of the present invention, there is provided a system comprising first circuits operable to obtain a digital representation of an ear cavity, second circuits operable to obtain an enlarged second digital representation of such an ear cavity from the first representation, and circuitry operable to produce a hollow, rigid mould from the second digital representation, wherein an interior surface of the mould corresponds to a surface of such an ear cavity.

### BRIEF DESCRIPTION OF THE DRAWINGS

Fig 1 illustrates a typical scan of ear impression scan captured using laser scanning technology;
Fig 2 illustrates the electronic representation of the Final Moulded Object after electronic sculpting in software;
Fig 3 illustrates the electronic representation of the final moulded object with the addition of a feature that will be use to create an injection port for moulding;
Fig 4 illustrates the comparison between the original sculpted object and the Offset Object that will comprise the exterior surface of the mould;
Fig 5 illustrates the alignment between the Offset of the original sculpted object and the original sculpted object;
Fig 6 illustrates a cross section of the Custom Injection Mould after the original sculpted object has been Boolean subtracted from the Offset Object and the injection port opening has been created;
Fig 7 illustrates the addition of air vents to the Custom Injection Mould;
Fig 8 illustrates the use of a static mixer and dispenser to inject elastomeric material into the Custom Mould Object;
Fig 9 illustrates the removal of the Custom Injection Mould material from the Final Injection Moulded piece;
Fig 10 illustrates the Final Injection Moulded Piece with moulding runners still attached;
Fig 11 illustrates the Final Injection Moulded Piece after runners have been removed;

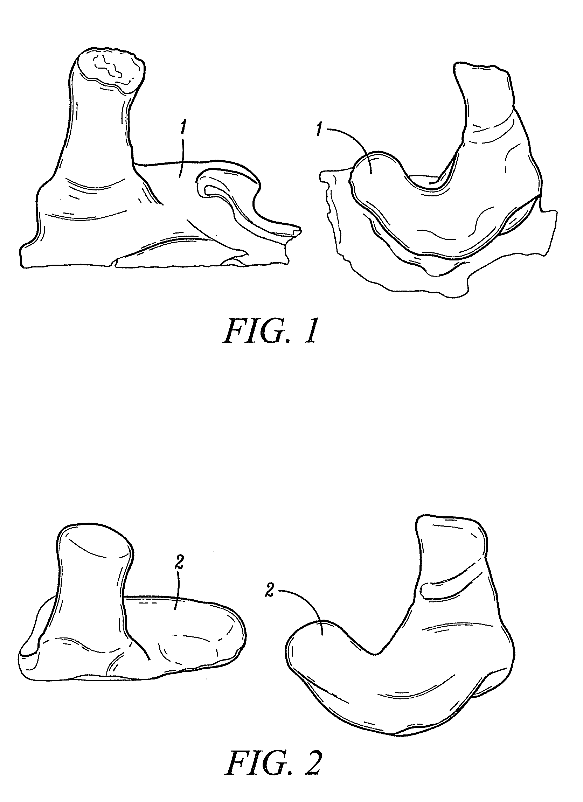

Fig 1 illustrates a typical scan of ear impression scan captured using laser scanning technology;

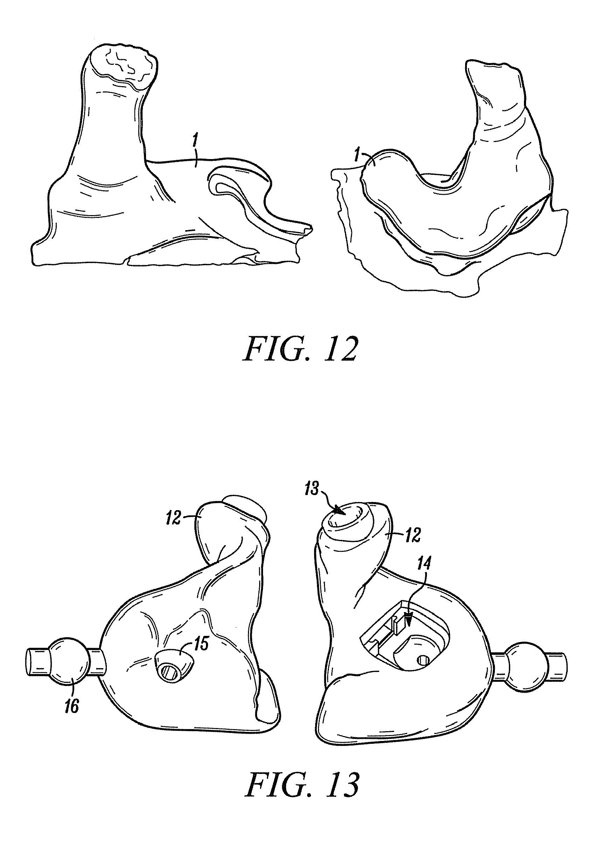

Fig 13 illustrates the electronic representation of the Final Moulded Object after electronic sculpting in software;

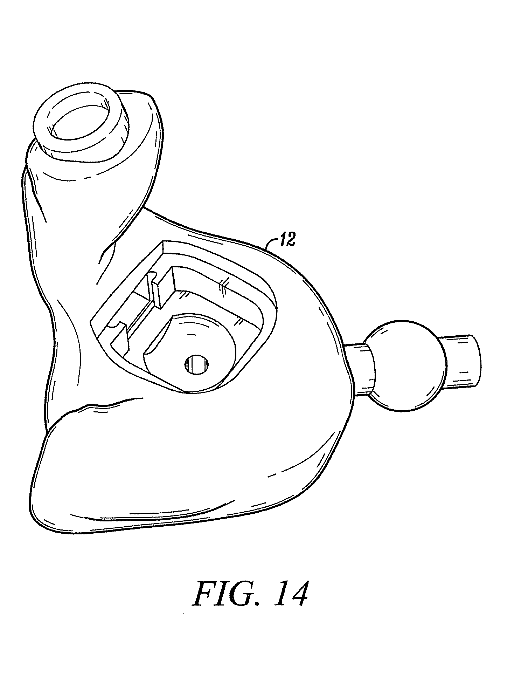

Fig 14 illustrates the electronic representation of the final moulded object with the addition of a feature that will be use to create an injection port for moulding;

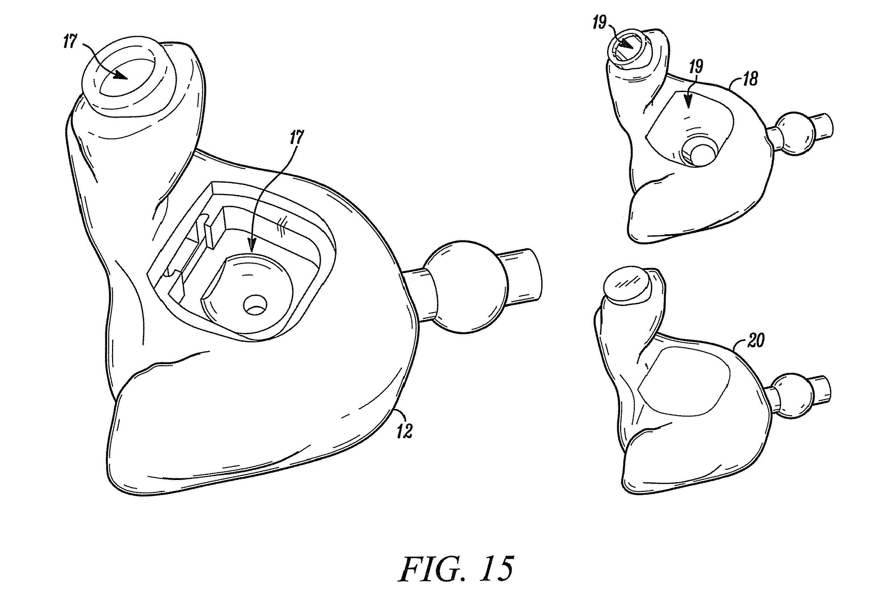

Fig 15 illustrates the identification, selection and deletion of any design element of the sculpted object that will not be associated with the exterior surface of the Custom Injection Mould;

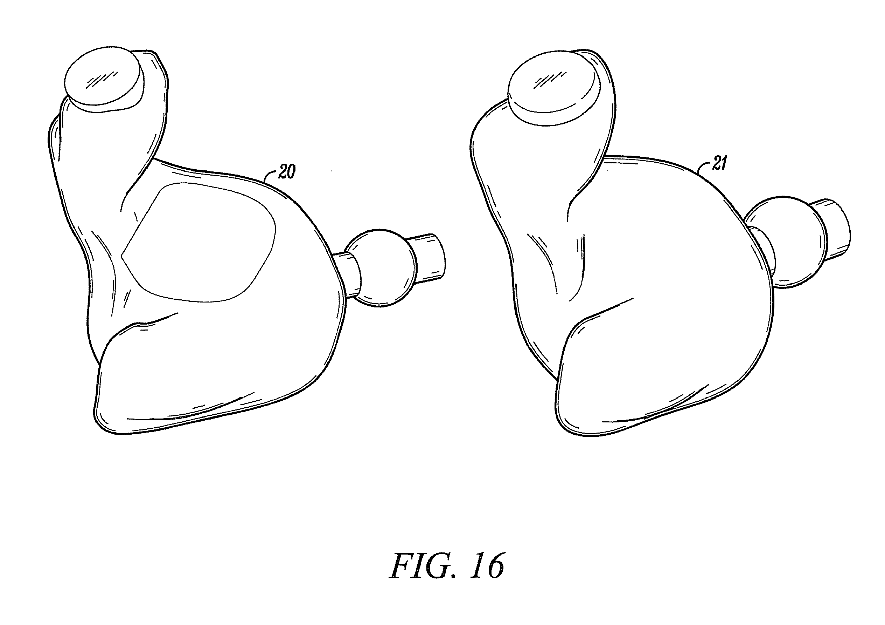

Fig 16 illustrates the comparison between the original sculpted object and the Offset Object that will comprise the exterior surface of the mould;

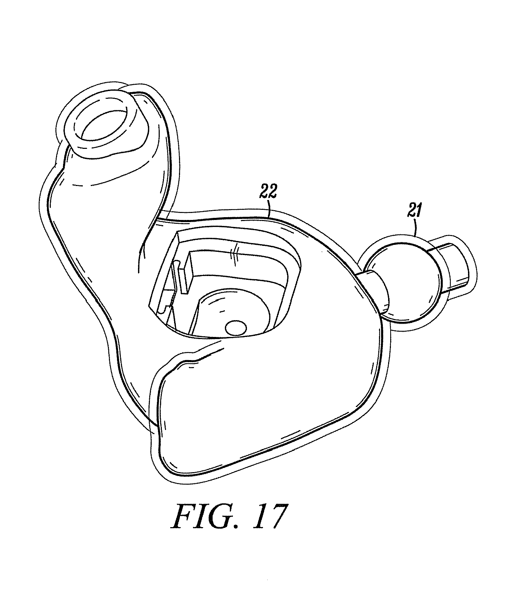

Fig 17 illustrates the alignment between the Offset of the original sculpted object and the original sculpted object;

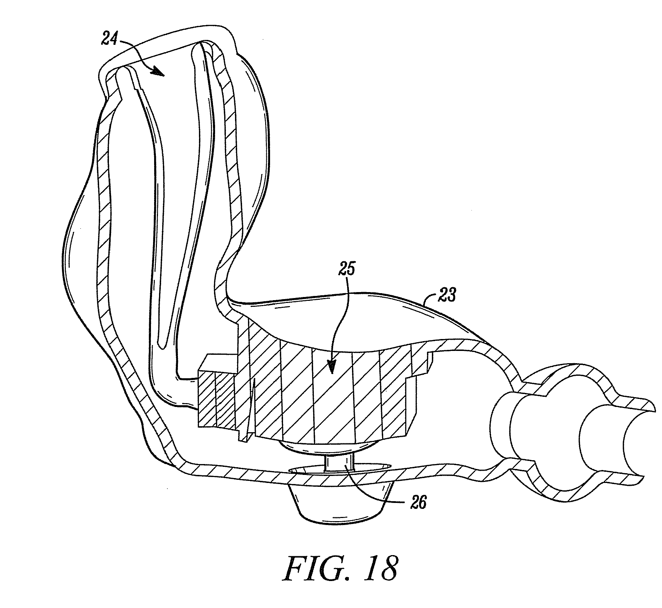

Fig 18 illustrates a cross section of the Custom Injection Mould after the original sculpted object has been Boolean subtracted from the Offset Object and the injection port opening has been created;

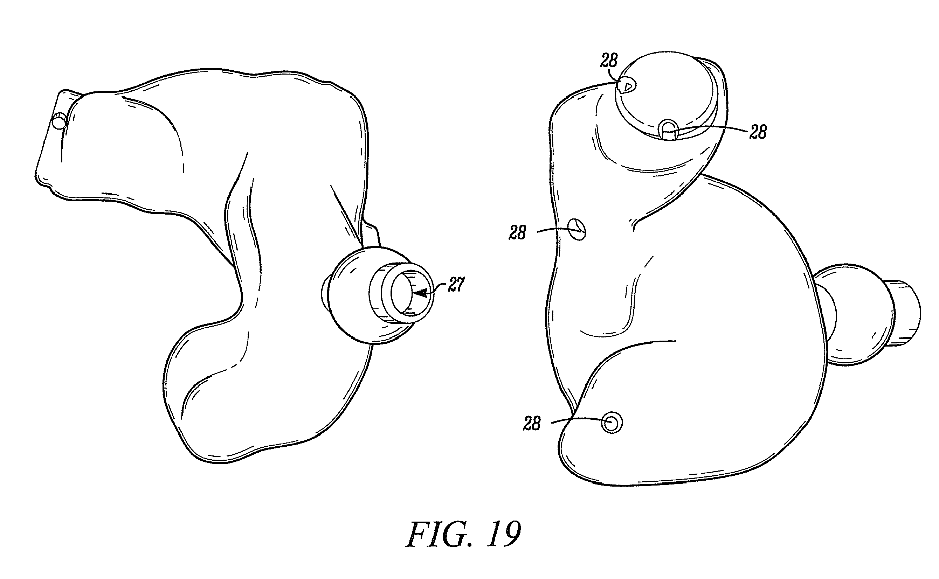

Fig 19 illustrates the addition of air vents to the Custom Injection Mould;

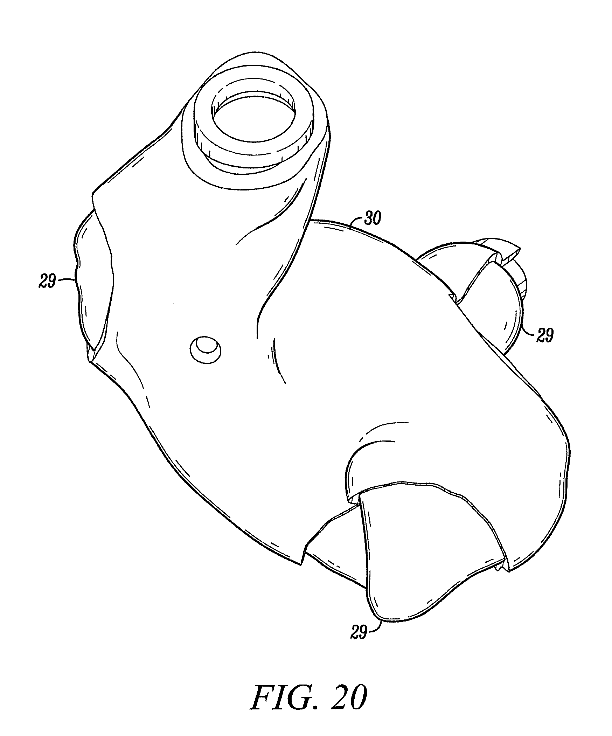

Fig 20 illustrates the removal of the Custom Injection Mould material from the Final Injection Moulded piece;

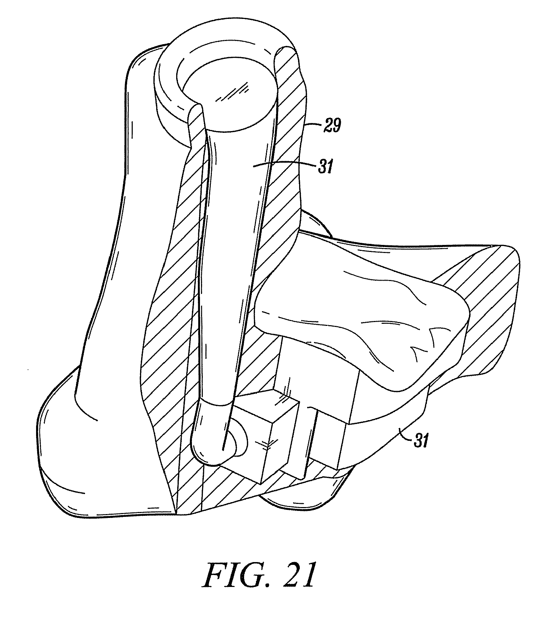

Fig 21 illustrates the removal of the Custom Injection Mould material that constitutes the interior cores of the mould from the Final Injection Moulded piece;

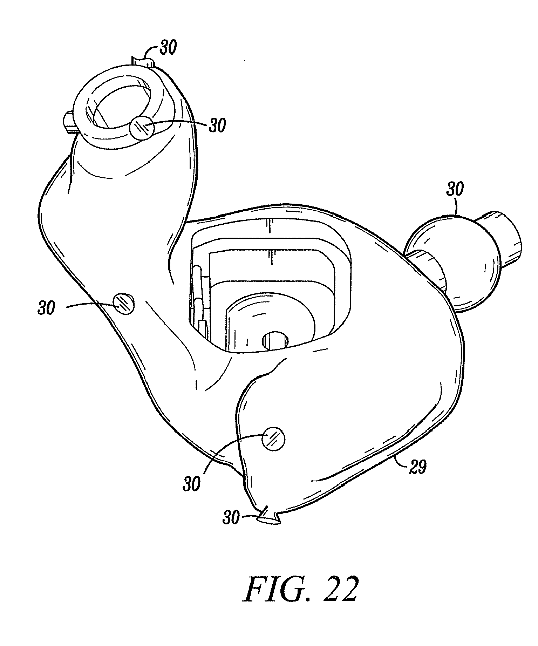

Fig 22 illustrates the Final Injection Moulded Piece with moulding runners still attached;

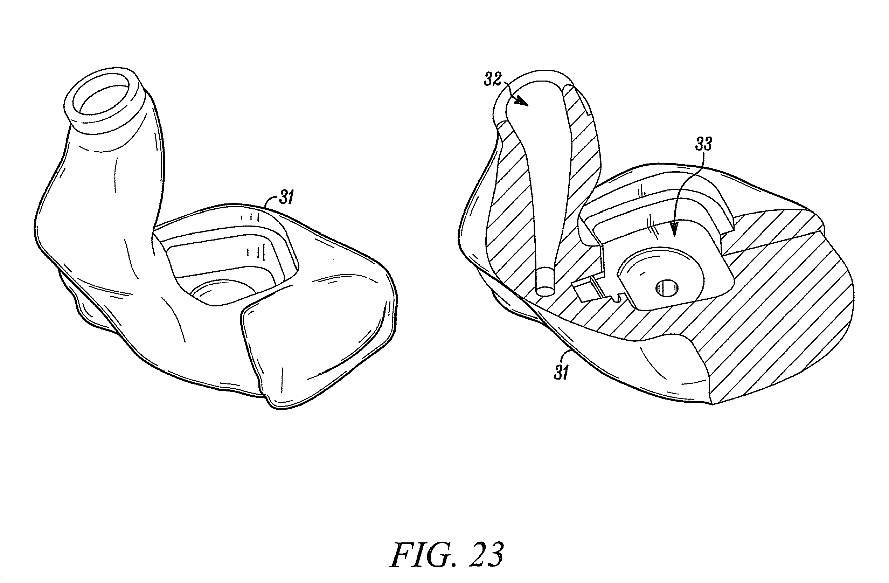

Fig 23 illustrates the Final Injection Moulded Piece after runners have been removed;

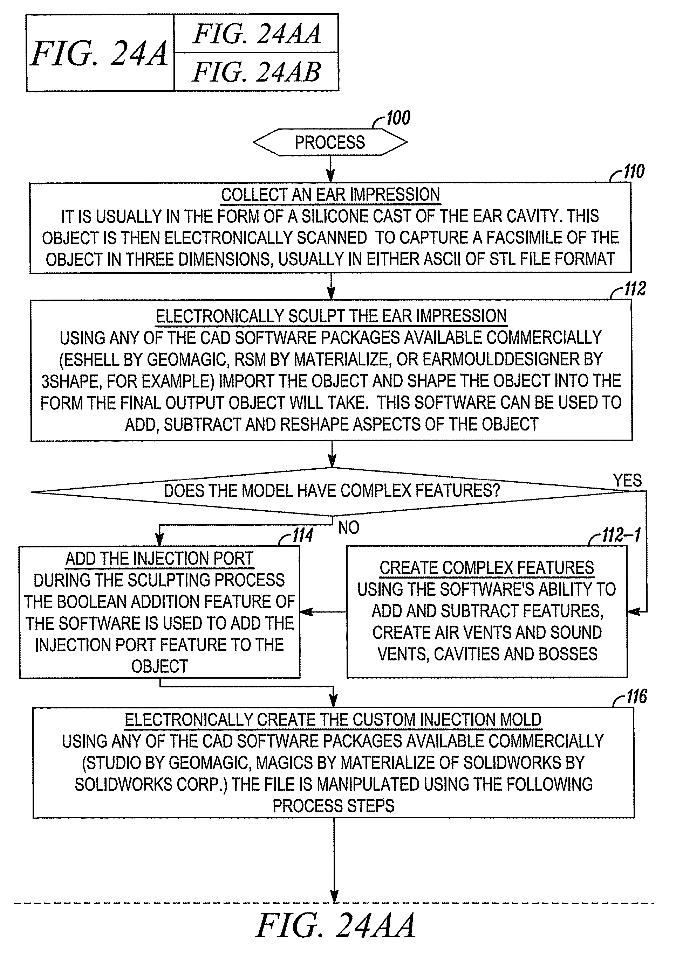

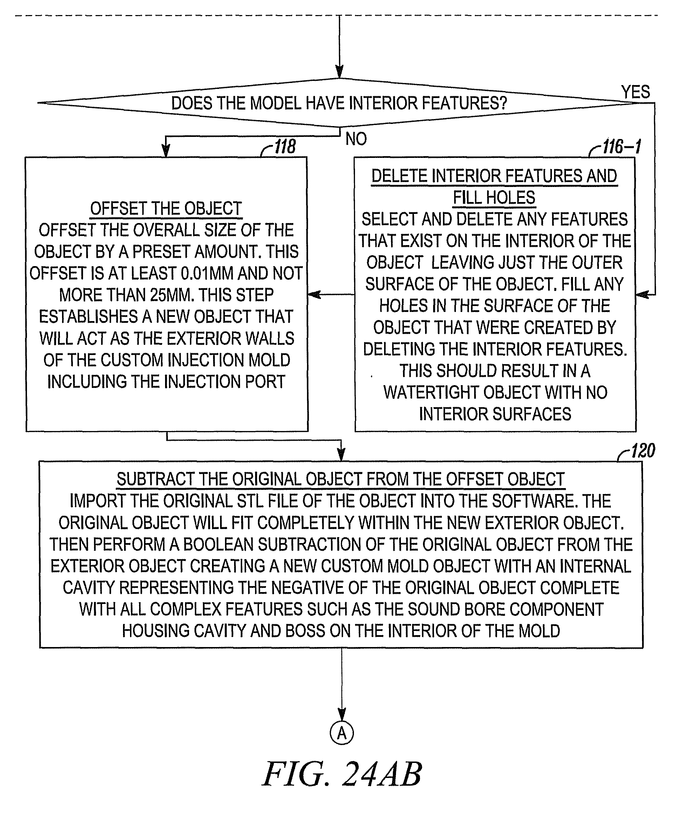

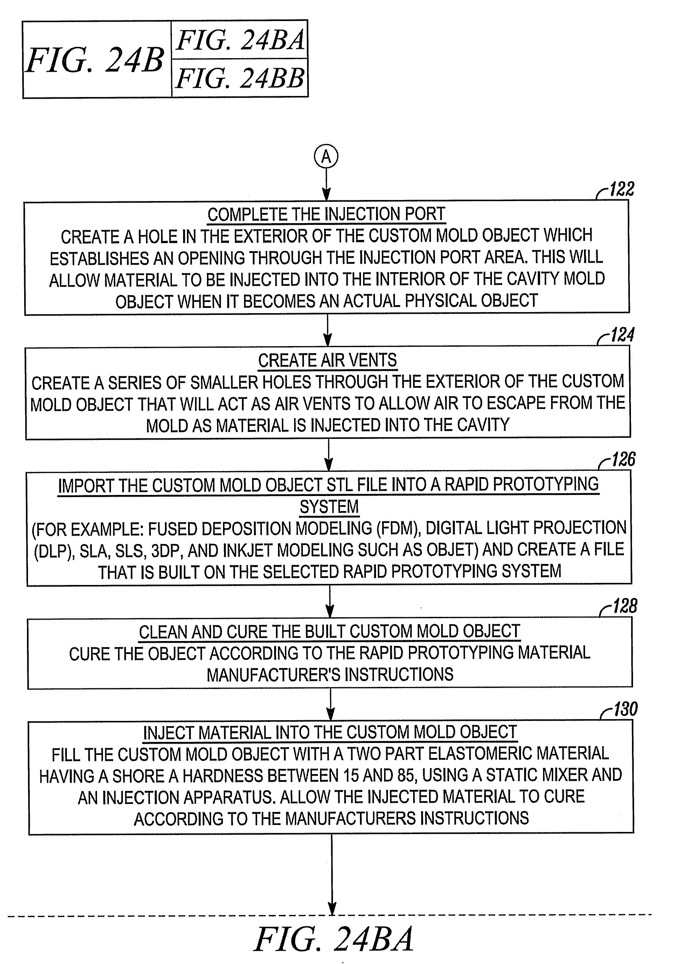

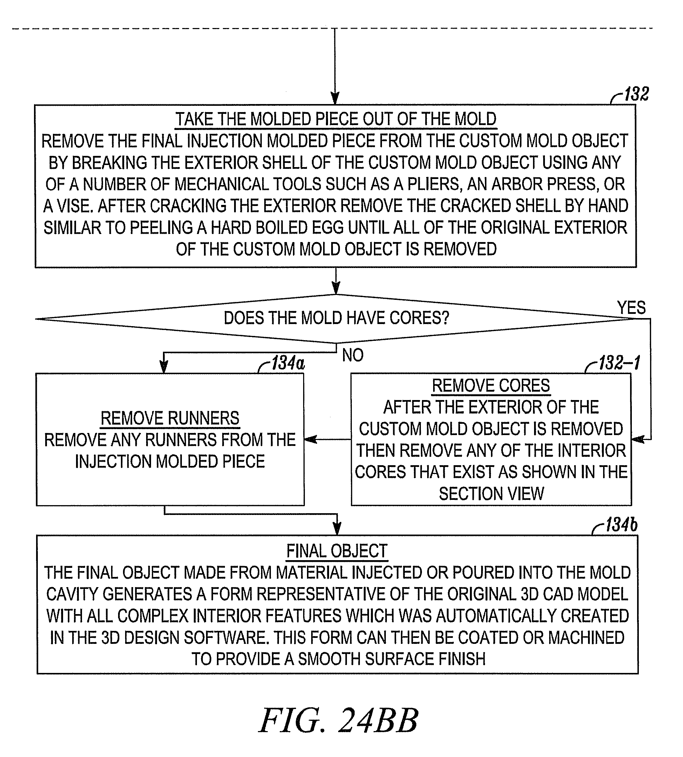

Figs 24A and 24B taken together illustrate aspects of the method of the present invention;
and

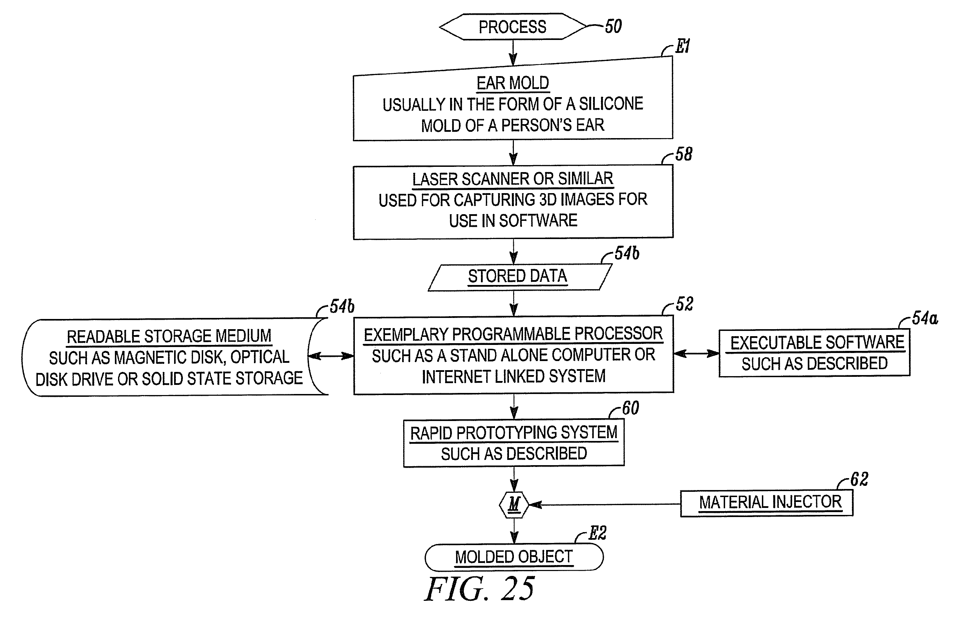

Fig. 25 is a block diagram of a system in accordance with one aspect of the present invention.

### DETAILED DESCRIPTION OF THE PREFERRED EMBODIMENTS

While embodiments of this invention can take many different forms, specific embodiments thereof are shown in the drawings and will be described herein in detail with the understanding that the present disclosure is to be considered as an exemplification of the principles of the invention, as well as the best mode of practicing same, and is not intended to limit the invention to the specific embodiment illustrated.

Embodiments of the invention represent improvements in making injection moulds of the type discussed here, particularly for, but not exclusive to, the moulding of elastomeric materials. Computer Aided Design software and Rapid Prototyping (RP) equipment are used in combination creating a useful process for making custom shaped articles for various applications such as hearing aids, medical prosthesis and dental articles, but the articles produced on rapid prototyping equipment are limited to non-elastomeric materials. However, using methods in accordance herewith, including the use of CAD software and then fabricating an injection mould on RP equipment, a useful, single use, custom shaped injection mould can be created for the use in the injection moulding of elastomeric materials.

Embodiments of the invention are applicable to the ear mould industry in particular, but any industry requiring elastomeric parts of complex custom moulded shapes could benefit. The moulds for the elastomeric parts are designed using automated software procedures and then fabricated on a Rapid Prototyping System such as Fused Deposition Modelling (FDM), Digital Light Projection (DLP), Stereo lithography (SLA), Selective Laser Sintering (SLS), Three Dimensional Printing (3DP) , and Inkjet Modelling (examples include Objet) using a plastic material. After the mould has been fabricated it can be filled with any type of elastomeric material. After curing the material the part is released from the mould by breaking it open. The mould can be used only one time.

In one aspect of the invention, the process starts with a 3D image of the shape to be produced this is referred to as the "original positive". The "original positive" is manipulated in software to create a "larger positive". The "original positive" is then subtracted from the "larger positive" to create a thin walled mould with an interior mould cavity called the "one-time mould".

The "one-time mould" is produced on any rapid prototyping system such as the ones listed above. When the mould is finished an elastomer is injected into the mould and allowed to cure according to the recommendations of the material manufacturer. After the elastomer cures the mould is broken open and peeled off the moulded article similar to peeling the shell off a hard-boiled egg. Advantageously, the process can be used to create moulded articles of complex shapes that include under cuts, inserted mechanical objects, and more than one material.

Aspects of a process 100 will now be described with respect to Figs. 1-11 and 24A,B. This process will form a mould without interior features. With respect to the figures, Step 110, Fig. 1 in the process requires capturing a custom shape--in this case an ear impression. An ear impression (1) is usually in the form of a silicone cast of the ear cavity. This object is then electronically scanned to capture a facsimile of the object in three dimensions, usually in either ASCII or STL file format. As those of skill in the art will understand, other formats could be used without departing from the spirit and scope of the invention.

Step 112, Fig. 2, electronically sculpt the object. Using any of the CAD software packages available commercially (eShell by Geomagic, RSM by Materialize, or EarMould Designer by 3Shape, for example) import the object and shape the object into the form the final output object will take (2). This software can be used to add, subtract and reshape aspects of the object.

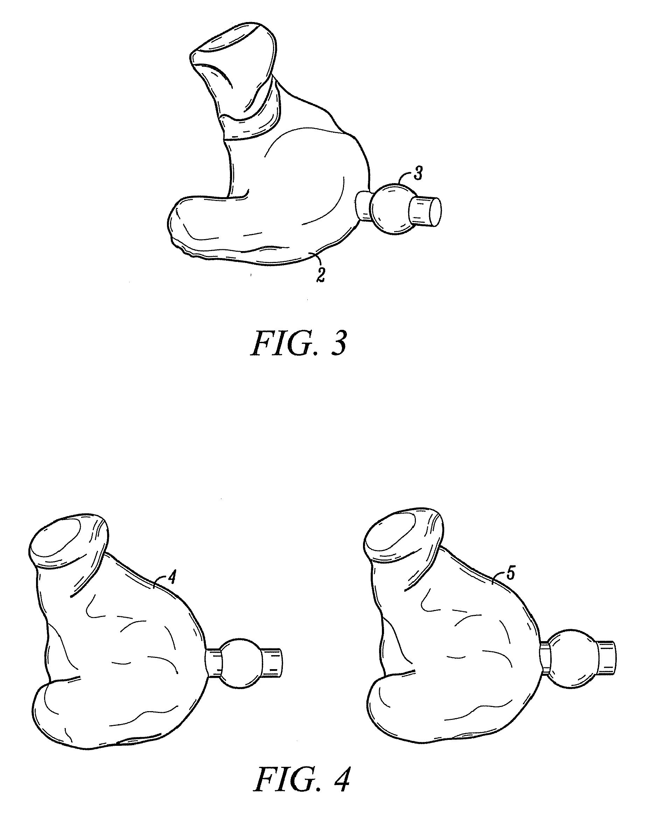

Step 114, Fig.3, electronically sculpt the object (2) by adding a feature to act as the material injection port. During the sculpting process the Boolean Addition feature of the software can be used to add the injection port feature (3) to the object (2) then save the Object in STL file format.

Step 116, Fig. 4, electronically prepare the Custom Injection Mould. Import the STL file of the object into the software and then, using any of the CAD software packages available commercially (Studio by Geomagic, Magics by Materialize or Solidworks by Solidworks Corp.), the file is manipulated, automatically or manually, as would be understood by those of skill in the art.

Step 118, Fig. 4, electronically prepare the Custom Injection Mould by creating an offset. Offset the overall size of the object (4) by a preset amount. This offset is preferably at least 0.01 mm and not more than 25mm. This step establishes a new object (5) that will act as the exterior walls of the Custom Injection Mould including the injection port.

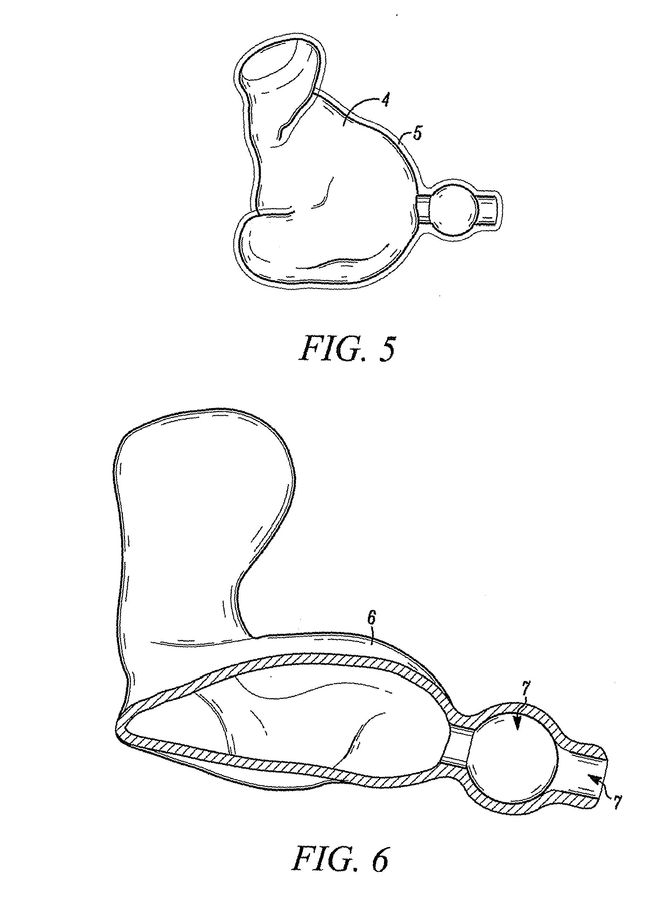

Step 120, Figs. 5 & 6, electronically prepare the Custom Injection Mould by subtracting the original file from the offset file. Import the original STL file of the object (4) into the offset file (5). The original object will fit completely within the new Exterior object (5). Then perform a Boolean subtraction of the original object from the Exterior object creating a new Custom Mould object with an internal cavity representing the negative of the original object (6).

Step 122, Fig. 6, electronically prepare the Custom Injection Mould by adding a hole for the injection port. Create a hole in the exterior of the Custom Mould Object (6) which establishes an opening through the injection port area (7). This will allow material to be injected into the interior of the Cavity Mould Object when it becomes an actual physical object.

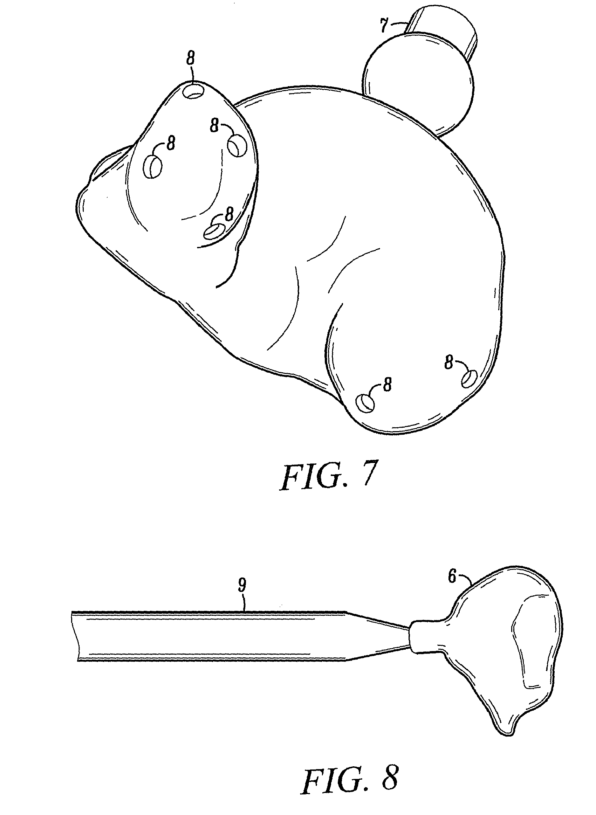

Step 124, Fig. 7, electronically prepare the Custom Injection Mould by creating air vents. Create a series of smaller holes through the exterior of the Custom Mould Object that will act as air vents (8) to allow air to escape from the mould as material is injected into the cavity through the injection port (7). Step 124 will electronically prepare the Custom Injection Mould by Saving the Custom Mould Object in STL file format.

Step 126, build the Custom Mould Object using Rapid Prototype Production. Import the Custom Mould Object STL file into any type of Rapid Prototyping System (for example: Fused Deposition Modelling (FDM), Digital Light Projection (DLP), SLA, SLS, 3DP, and Inkjet Modelling such as Objet) and create a file that can be built on the selected Rapid Prototyping System.

After building the Custom Mould Object, as at 126, on the machine clean and cure the built Custom Mould Object according to the rapid prototyping material manufacturer's instructions, as at 128. Preferably, the interior of the mould will be fully cured to prevent any chemical interaction between the rapid prototyping material and the injection moulding material.

Step 130, Fig. 8, perform the injection Mould Process using the Custom Mould Object. Fill the Custom Mould Object (6) with, for, example, a two part elastomeric material having a Shore A hardness between 15 and 85, using a static mixer (9) and an injection apparatus. Allow the injected material to cure according to the manufacturer's instructions.

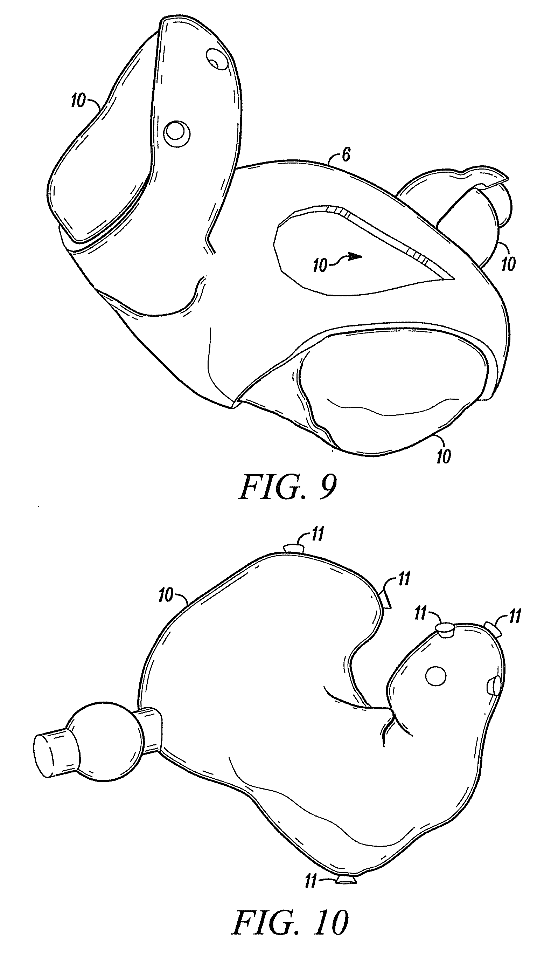

Step 132, Fig.9, Remove the Injected Material from the Custom Mould Object. Remove the final injection moulded piece (10) from the Custom Mould Object (6) by breaking the exterior shell of the Custom Mould Object using any of a number of mechanical tools such as pliers, an arbour press, or a vice. After cracking the exterior remove the cracked shell by hand similar to peeling a hardboiled egg until the entire original exterior of the Custom Mould Object is removed.

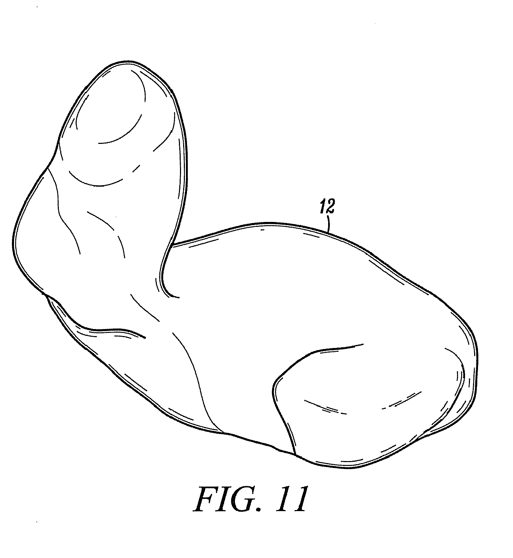

Steps 134a,b Figs.10 & 11, Final Object Preparation. Remove the runners (11) from the injection moulded piece (10). The final object (12) made from material injected or poured into the mould cavity generates a form representative of the original 3D CAD model (Figure 2, (2)) which was automatically created in the 3D design software. This form can then be coated or machined to provide a smooth surface finish.

In another aspect of the process 100, in accordance with the invention, a mould can be formed with multiple interior features. Referring again to the figures, Step 110, Fig. 12, in the process requires capturing a custom shape-in this case an ear impression. An ear impression (1) is usually in the form of a silicone cast of the ear cavity. This object is then electronically scanned to capture a facsimile of the object in three dimensions, usually in either ASCII or STL file format.

Step 112 Fig. 13, electronically sculpt the object by using any of the CAD software packages available commercially (eShell by Geomagic, RSM by Materialize, or EarMouldDesigner by 3Shape, for example). Import the object and shape the object into the form the final output object will take (12). This software can be used to add, subtract and reshape aspects of the object.

Step 112-1, Fig. 13, electronically sculpt the object by making complex feature additions. Using the software's ability to add and subtract features, complex features can be added to or subtracted from the mould interior and exterior. For example air vents and sound vents (13) that are potentially curved, have changing diameters and are not round in shape. Cavities (14) and bosses (15) can be added that function as packaging sites or strain relief for electronic or mechanical components. During the sculpting step the Boolean Addition feature of the software is used to add the injection port feature (16) to the object. The Object can then be saved in STL file format or any other desired format.

Step 116, Fig. 14, electronically prepare the Custom Injection Mould by importing the STL file of the object (12) into the software using any of the CAD software packages available commercially (Studio by Geomagic, Magics by Materialize of Solidworks by Solidworks Corp.) the file is manipulated manually or automatically using the following process steps

Step 116-1, Fig. 15, electronically prepare the Custom Injection Mould by deleting interior features and closing holes. Select and delete any features that exist on the interior of the object (17) leaving just the outer surface of the object (18). Then fill any holes (19) in the surface of the object that were created by deleting the interior features. This should result in a watertight object with no interior surfaces (20).

Step 118, Fig. 16, electronically prepare the Custom Injection Mould by offsetting the exterior surface. Offset the overall size of the object (20) by a preset amount. This offset is, preferably, at least 0.01 mm and not more than 25mm. This step establishes a new object (21) that will act as the exterior walls of the Custom Injection Mould including the injection port.

Step 120, Figs. 17 & 18, electronically prepare the Custom Injection Mould by subtracting the original file from the offset file. Import the original STL file of the object (22) into the software. The original object will fit completely within the new Exterior object (21). Then perform a Boolean subtraction of the original object from the Exterior object creating a new Custom Mould object (23) with an internal cavity representing the negative of the original object complete with all complex features such as the sound bore (24), component housing cavity (25) and boss (26) on the interior of the mould.

Steps 122, 124 Fig. 19, electronically prepare the Custom Injection Mould by creating a hole in the exterior of the Custom Mould Object which establishes an opening (27) through the injection port area. This will allow material to be injected into the interior of the Cavity Mould Object when it becomes an actual physical object. Create a series of smaller holes (28) holes through the exterior of the Custom Mould Object that will act as air vents to allow air to escape from the mould as material is injected into the cavity. Save the Custom Mould Object in STL file format.

Step 126, build the Custom Mould Object using Rapid Prototype Production. Import the Custom Mould Object STL file into any type of Rapid Prototyping System (for example: Fused Deposition Modelling (FDM), Digital Light Projection (DLP), SLA, SLS, 3DP, and Inkjet Modelling such as Objet) and create a file that is built on the selected Rapid Prototyping System.

Step 128, after building the object on the rapid prototyping machine, clean and cure the built Custom Mould Object according to the rapid prototyping material manufacturer's instructions. Care must be taken to fully cure the interior of the mould to prevent any chemical interaction between the rapid prototyping material and the injection moulding material.

Step 130, Fig. 8, then perform the Injection Mould Process using the Custom Mould Object. Fill the Custom Mould Object with a two part elastomeric material having a Shore A hardness between 15 and 85, using, for example, a static mixer and an injection apparatus. Allow the injected material to cure according to the manufacturer's instructions

Step 132, 132-1, Figs. 20 & 21, remove the final injection moulded piece (29) from the Custom Mould Object (30) by breaking the exterior shell of the Custom Mould Object using any of a number of mechanical tools such as pliers, an arbour press, or a vice. After cracking the exterior remove the cracked shell by hand similar to peeling a hardboiled egg until the entire original exterior of the Custom Mould Object is removed. After the exterior of the Custom Mould Object is removed then remove any of the interior cores (31) that exist inside the final injection moulded piece (29) as shown in the section view.

Steps 134a,b Fig. 22 & 23, Final Object Preparation requires the removal of any runners (30) from the injection moulded piece (29). The final object (31) made from material injected or poured into the mould cavity generates a form representative of the original 3D CAD model (Figure 13 (12)) with all complex interior features such as sound tubes (32) and cavities (33) which were automatically created in the 3D design software. This form can then be coated or machined to provide a smooth surface finish.

Fig. 25 illustrates a block diagram 50 in accordance with the present invention. System 50 includes an exemplary programmable processor 52 with an associated computer readable storage medium, such as a magnetic or optical disk drive or solid state storage circuits 54. Processor 52 can be part of a standalone computer system, an internet linked system or part of a wireless communication system.

Executable software 54a, corresponding to various of the software packages discussed above, can be stored in executable form in the computer readable medium 54, loaded into processor 52 and executed in carrying out the various previously discussed processing steps. The storage unit 54 can also store data 54b, which could be person specific, or include parameters for use in moulding as discussed above. All such data 54b could be uploaded to processor 52 as needed as would be understood by those of skill in the art.

System 50 can also include a scanner 58 coupled to the processor 52. Scanner 58 can be of a type which can directly scan an individual's ear and provide a digital representation thereof to processor 52. Alternately, scanner 58 can scan a pre-created ear mould E1, of a conventional variety, of the individual's ear.

The processor 52 is coupled to a rapid prototyping system 60, such as discussed above, which responds to commands and data from processor 52 to produce a substantially rigid, hollow mould M as discussed above. A manual, or, automatic injector 62 can be used to inject uncured elastomeric material into the hollow mould M. Once the elastomeric material has been cured, the mould M can be broken open and the customized ear plug E2 removed. If needed, the system 60 could be used to create a duplicate of the mould M for later use.

Those of skill will understand that while embodiments of the invention have been described with respect to various commercial products and software, such are exemplary only. None of the exact details of such products or software represent limitations of the present invention. It will also be understood that various computer system configurations come within the spirit and scope of the invention. Such variations include, portable or PC based systems, networked systems, internet based systems, or wireless communications/telephony systems all without limitation.

Advantages of processes in accordance with embodiments of the present invention include:

That the use of this process including the use of 3D software will automatically generate a cavity mould with the correct placement of the injection port. Once this mould is generated and injected or filled with a heat curable, moisture curable or light curable material and the cavity is removed, the part will be an exact or approximate representative of the original 3D CAD model.

The apparatus can be used to making any variety of complex custom shapes from elastomeric materials injected into the Custom Injection Mould, these include but are not limited to ear moulds for hearing protection, hearing device adaptation and personalized sound transmission devices.

The development of a thin walled "one time mould" constitutes a unique process for creating injection moulded parts. Using an ear impression in ASCII or STL file format in conjunction with any of the CAD software packages available commercially (eShell by Geomagic, RSM by Materialize, or EarMouldDesigner by 3Shape, for example) A 3D object can be created that represents the final elastomeric device. This device may contain complex features which are added to or subtracted from the mould interior and exterior. For example air vents and sound vents that are potentially curved, have changing diameters and are not round in shape. Cavities and bosses can be added that function as packaging sites for electronic or mechanical components. One of these features is a specially designed material injection port.

Using any of the CAD software packages available commercially (Studio by Geomagic, Magics by Materialize of Solidworks by Solidworks Corp.) the file is manipulated using the defined process steps. In this application the automation of these software functions is proposed--the automation of these functions does not currently exist.

This process includes the selection and deletion of any features that exist on the interior of the object. All holes in the surface of the object that were created by deleting the interior features are subsequently filled resulting in a watertight object with no interior surfaces. The object is offset in the overall size by a preset amount that is at least 0.01 mm and not more than 25mm. This step establishes a new object that will act as the exterior walls of the Custom Injection Mould including the injection port.

The original object completely fits within the new Exterior object and is then Boolean subtracted from the Exterior Object creating a new Custom Mould object with an internal cavity representing the negative of the original object complete with all complex features such as the sound bore component housing cavity and boss on the interior of the mould.

A hole in the exterior of the Custom Mould Object establishes an opening through the injection port area. This will allow material to be injected into the interior of the Cavity Mould Object when it becomes an actual physical object. The creation of a series of smaller holes through the exterior of the Custom Mould Object will act as air vents to allow air to escape from the mould as material is injected into the cavity.

The cavity can be built using an additive process such as Fused Deposition Modelling (FDM), Digital Light Projection (DLP), Stereo lithography (SLA), Selective Laser Sintering (SLS), Three Dimensional Printing (3DP) , and Inkjet Modelling (examples include Object).

The Custom Mould Object can be filled with a two part elastomeric material having a Shore A hardness between 15 and 85, using a static mixer and an injection apparatus.

The elastomeric part can be removed from the mould by cracking or dissolving the cavity rendering the mould unusable more than one time.

The material injected or poured into the mould cavity generates a form representative of the original 3D CAD model which was automatically created in the 3D design software. This form can then be coated to provide a smooth surface finish.

This process constitutes a simple method over prior art such as a multi-section mould. The creation of a continuous one piece mould has advantages over the prior art of a multi-section mould in that it:
1. eliminates the need for alignment features between sections,
2. it eliminates the need for smooth surfaces to create tight mating lines for preventing flash, and
3. it prevents any flash from occurring during the moulding process.

This process, in that it creates a one piece mould, eliminates the need to clamp mould sections together in an attempt to form a tight seal between sections. While this renders the mould unusable for more than this one moulded piece, there is no mould to clean or reconstruct. Additional pieces are made by the creation of additional moulds.

In this process the complex features and cores can be placed anywhere without consideration of their location in regard to parting lines, since there are no parting lines in the mould. Additionally, there is no mould flash to remove in this process.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. A method comprising:
establishing a representation of a shape of an ear cavity;
forming a second representation of the shape of the ear cavity wherein the second representation is larger than the representation by a predetermined amount;
deleting interior material from the second representation in accordance with the shape of the representation thereby producing a substantially hollow region in the second representation; and
filling the hollow region, at least in part, with an elastomeric material; and
curing the elastomeric material to form an elastomeric object.

2. A method as claimed in claim 1, further comprising installing components in the elastomeric object, and which includes filling at least a portion of the hollow region with a second, different material.

3. A method as claimed in claim 1 or 2, wherein establishing a representation of a shape of an ear cavity comprises:
converting a physical representation of an ear cavity to an electronic model of an ear cavity;
enlarging the electronic model the said predetermined amount to form the secondary representation; and
incorporating selected features into the secondary representation.

4. A method as claimed in claim 1, 2 or 3, wherein deleting interior material from the second representation comprises:
providing a substantially rigid mould with an interior surface corresponding to the shape of the representation and a wall thickness which corresponds to the predetermined amount;
breaking the mould, at least in part, and extracting the elastomeric object therefrom;
and
filling a part of the hollow region with internal feature defining extensions of the rigid mould,
and wherein providing a substantially rigid mould includes using a rapid prototyping process in creating the rigid mould.

5. A method as claimed in claim 4, further comprising surrounding the feature defining extensions, at least in part, with the elastomeric material prior to curing that material.

6. A method as claimed in claim 5, further comprising extracting the surrounded feature defining extensions from within the elastomeric material, wherein such extracting includes temporarily distorting the elastomeric object to remove at least parts of the extensions.

7. An element comprising:
a hollow, rigid shell (6) with an interior surface which replicates a selected interior portion of an individual's ear; and
an elastomeric member (10), contained substantially within the shell,
wherein an external surface of the elastomeric member (10) abuts and is in contact with at least portions of the interior surface of the shell, and wherein portions of the shell extend into the elastomeric member and are surrounded thereby, at least in part.

8. An element as claimed in claim 7, wherein the shell (6) is breakable and the elastomeric member (10) is extractable therefrom.

9. An element as claimed in claim 7 or 8, wherein the said portions of the shell (6) are removable from the elastomeric member (10), and wherein the elastomeric member (10), after removal of the portions of the shell (6), includes an interior acoustic path.

10. An element as claimed in claim 9, further comprising at least one component receiving region moulded into the member, wherein the component receiving region is substantially surrounded by the member.

11. An element as claimed in claim 9 or 10, wherein at least one portion of the member is spaced from a body portion of the member and an intervening region is substantially filled by a portion of the shell, and wherein that portion of the shell filling the intervening region is removable.

12. A system comprising:
first circuits operable to obtain a digital representation of an ear cavity;
second circuits (52) operable to obtain an enlarged second digital representation of such an ear cavity from the first representation; and
circuitry operable to produce a hollow, rigid mould from the second digital representation,
wherein an interior surface of the mould corresponds to a surface of such an ear cavity.

13. A system as claimed in claim 12, further comprising:
an apparatus (62) to inject a curable elastomer into a hollow rigid mould; and
an electronic storage device (54) coupled to the first and second circuits and selected from a class which includes, at least, a magnetic storage device, an optical storage device, and a semiconductor storage device,
wherein said circuitry includes a rapid prototyping system (60).

14. A system as claimed in claim 12 or 13, wherein the first circuits comprise a scanner (58), and wherein the system further comprises control circuits operable to locate selected features on, or in, the enlarged second representation of the ear cavity, the selected features including at least one of a component receiving cavity, and an audio path.

15. A system as claimed in claim 12, 13, or 14, wherein the second circuits include circuits operable to remove the first representation from the second representation thereby forming a hollow shell representation having a selected wall thickness, and wherein said circuitry is operable to create a hollow rigid mould in response to the hollow shell representation.
